(19) Europäisches Patentamt
European Patent Office
Office européen des brevets

(11) **EP 2 365 762 B2**

(12) # NEW EUROPEAN PATENT SPECIFICATION
After opposition procedure

(45) Date of publication and mention
of the opposition decision:
**16.10.2019 Bulletin 2019/42**

(45) Mention of the grant of the patent:
**02.11.2016 Bulletin 2016/44**

(21) Application number: **09755842.3**

(22) Date of filing: **13.11.2009**

(51) Int Cl.:
***A23L 2/52*** *(2006.01)*

(86) International application number:
**PCT/EP2009/008091**

(87) International publication number:
**WO 2010/054829 (20.05.2010 Gazette 2010/20)**

(54) **IMPROVING THE MOUTHFEEL OF BEVERAGES**

VERBESSERUNG DES MUNDGEFÜHLS VON GETRÄNKEN

AMELIORATION DE LA SENSATION DANS LA BOUCHE DES BOISSONS

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **14.11.2008 PCT/EP2008/009673**

(43) Date of publication of application:
**21.09.2011 Bulletin 2011/38**

(73) Proprietor: **Cargill, Incorporated**
**Wayzata, MN 55391 (US)**

(72) Inventors:
 • **DEBON, Stéphane Jules Jérome**
 **1060 Brussel (BE)**
 • **VAN DER BURGT, Bas**
 **5212 BW's Hertogenbosch (NL)**
 • **VANHEMELRIJCK, Jozef Guido Roza**
 **1860 Meise (BE)**

(74) Representative: **Morariu Radu, Mihai Dorin et al**
**Cargill R&D Centre Europe BVBA**
**Bedrijvenlaan 9**
**2800 Mechelen (BE)**

(56) References cited:
EP-A1- 0 426 434     WO-A1-2008/009617
WO-A1-2009/003931    US-A- 5 422 134
US-A- 5 424 088       US-A1- 2007 160 734
US-B1- 6 673 384

• **FISHMAN MARSHALL L ET AL: "Global structure of microwave-assisted flash-extracted sugar beet pectin" JOURNAL OF AGRICULTURAL AND FOOD CHEMISTRY, vol. 56, no. 4, February 2008 (2008-02), pages 1471-1478, XP002559429 ISSN: 0021-8561**
• **ROMBOUTS F M ET AL: "Feruloylated pectic substances from sugar-beet pulp" CARBOHYDRATE RESEARCH, ELSEVIER SCIENTIFIC PUBLISHING COMPANY. AMSTERDAM, NL, vol. 154, no. 1, 15 October 1986 (1986-10-15), pages 177-187, XP026618819 ISSN: 0008-6215 [retrieved on 1986-10-15]**
• **LAURENT M A ET AL: "Stabilization mechanism of acid dairy drinks (ADD) induced by pectin." FOOD HYDROCOLLOIDS, vol. 17, no. 4, July 2003 (2003-07), pages 445-454, XP002559056 ISSN: 0268-005X**
• **RENARD C M G C ET AL: "STRUCTURE AND PROPERTIES OF APPLE AND SUGAR-BEET PECTINS EXTRACTED BY CHELATING AGENTS" CARBOHYDRATE RESEARCH, ELSEVIER SCIENTIFIC PUBLISHING COMPANY. AMSTERDAM, NL, vol. 244, no. 1, 21 May 1993 (1993-05-21), pages 99-114, XP000368158 ISSN: 0008-6215**
• **RASCON-CHU A ET AL: "Pectin from low quality 'Golden Delicious' apples: Composition and gelling capability" FOOD CHEMISTRY, ELSEVIER SCIENCE PUBLISHERS LTD, GB, vol. 116, no. 1, 1 September 2009 (2009-09-01), pages 101-103, XP026053908 ISSN: 0308-8146 [retrieved on 2009-02-15]**

EP 2 365 762 B2

- **OMOTO T ET AL: "The latest technologies for the application of gellan gum" PROGRESS IN COLLOID & POLYMER SCIENCE, STEINKOPFF VERLAG, DARMSTADT, DE, vol. 114, 1 January 1999 (1999-01-01), pages 123-126, XP009126833 ISSN: 0340-255X**

- **AVALLONE S ET AL: "Fate of mucilage cell wall polysaccharides during coffee fermentation" CA, STN, JOURNAL OF AGRICULTURAL AND FOOD CHEMISTRY, vol. 49, no. 11, 1 January 2001 (2001-01-01), pages 5556-5559, XP002984300 ISSN: 0021-8561**

**Description**

**Technical Field of the Invention**

The present invention relates to the field of altering the perceptional characteristics of beverages. In particular, the present invention relates to a method for improving the mouthfeel of beverages by adding hydrocolloids having a particular intrinsic viscosity.

**Background of the Invention**

Bodyweight concerns are of paramount importance to the world population; to react to this, food manufacturers are eager to reduce calories in beverages (e.g. "reduced calories", "light beverages", etc); however, these beverages often have a lower consumers' acceptance rate as they lack the mouthfeel, body and flavor of their regular equivalents. The addition of low calorie ingredients which can partially or totally substitute high calorie ingredients is therefore an important challenge for the beverage industry. The challenge is to maintain the flavor, the mouthfeel, the body and the taste of the regular beverage, and thus generate a similar sensory response.

Thus, there is a long felt need in the industry to find a possibility to improve the mouthfeel of beverages, particularly of calorie-reduced beverages such as for example light beverages, where consumers' acceptance is often compromised by their lack of body or mouthfeel as compared to their full-calorie equivalents. A typical example of this problem exists in the carbonated beverage industry, where light drinks often lack acceptance for their difference in body as compared to full-calorie drinks.

In WO 2007/066233, novel oil phases for the preparation of beverage emulsions were disclosed. These oil-in-water emulsions were based on an oil phase having a density of 0.99 to 1.05 $g/cm^3$ and a viscosity of 10 to 1500 cP (centipoises), an aqueous phase and pectin, and they were reported to show enhanced emulsifying properties and stability. However, only certain types of beverages can be prepared from such oil-in-water emulsions. In addition, no information on the mouthfeel properties of the final emulsion-based beverage is provided in this document.

In EP 0 426 434 A1 food and drug products were disclosed whose physicochemical, rheological and nutritional properties were improved by incorporating sugar beet pectins therein.

So far, the research of improving the mouthfeel of beverages has mainly focused on density and viscosity.

There remains a need to further improve the mouthfeel of beverages. The present invention provides a method to improve the mouthfeel of beverages by adding a particular group of hydrocolloids.

**Summary of the Invention**

According to a first aspect, the invention relates to a method for improving the mouthfeel of beverages according to claim 1.

According to a second aspect, the present invention relates to a calorie-reduced beverage composition having a lubricity which is about equal or higher than the lubricity of its equivalent full calorie beverage, according to claim 7.

According to a third aspect, the present disclosure relates to the use of hydrocolloids for improving the mouthfeel of beverages.

**Brief description of the Drawings**

Figure 1 shows a spectrophotometric scan (0.1 nm bandwidth) of sugar beet pectin at a concentration of 174.9 □g/mL in 0.1M NaCl/0.02M acetate buffer.

Figure 2 shows the Stribeck curves of a light and a regular non-carbonated Oasis® type beverage.

Figure 3 shows the differential Stribeck curves of Figure 2 with the determination of the maximum differential friction factor $(\Delta\mu)_{max}$.

Figure 4 shows the rheological & tribological mapping of non-carbonated Oasis® type beverages (regular and beverages spiked with 600ppm hydrocolloids) *versus* light beverage reference (CMC = carboxymethyl cellulose).

Figure 5 shows the rheological & tribological mapping of carbonated Fanta®-type beverages (regular beverage and light beverages spiked with 50, 150, 300, 600, 800 and 1,000 ppm sugarbeet pectin) *versus* light beverage reference.

Figure 6 shows a tribological measurement of Fanta®, Fanta Light® and Fanta Light® with increasing concentrations of sugar beet pectin.

## Detailed Description

The term "beverage", as used herein, means a drinkable composition. Beverages include, but are not limited to the following: carbonated and non-carbonated, alcoholic and non-alcoholic drinks including but not limited to carbonated water, flavored water, carbonated flavored water, drinks containing juice (juice derived from any fruit or any combination of fruits, juice derived from any vegetable or any combination of vegetables) or nectar, milk obtained from animals, milk product derived from soy, rice, coconut or other plant material, sports drinks, vitamin enhanced sports drinks, high electrolyte sports drinks, highly caffeinated high energy drinks, coffee, decaffeinated coffee, tea, tea derived from fruit products, tea derived from herb products, decaffeinated tea, wine, champagne, malt liquor, rum, gin, vodka, other hard liquors, beer, reduced calorie beer-type beverages, non-alcoholic beer, and other beer-type beverages obtained from a cereal solution such as beer, ale, stout, lager, porter, low alcoholic beer, alcohol-free beer, kvass, rye-bread beer, shandy, malt drinks and the like. Cereal in this context refers to grains commonly used to make the beverages listed above and other similar beverages. However, the term "beverage" excludes 100% juice based-beverages.

The term "mouthfeel" of a beverage according to the present invention is the tactile sensations perceived at the lining of the mouth, including the tongue, gums and teeth. The "body" according to the present invention is the richness of flavour or impression of consistency given by a beverage. The present invention allows an "improved mouthfeel" without affecting the organoleptic characteristics in such a way that the beverage would be assessed as unpleasantly thick or sticky. This "improved mouthfeel" can be examined best by a taste panel consuming said beverage in comparison to the same beverage without the ingredient to be examined; or using a tribological device (see below).

In one aspect of the present invention, the inventors developed a method for improving the mouthfeel of beverages, which comprises the step of adding one or more hydrocolloids ("first hydrocolloids") with particular intrinsic viscosity to the beverage composition. By "adding" it is meant that if a beverage already contains hydrocolloids, its mouthfeel can be improved by adding, in addition, further hydrocolloid.

The first hydrocolloid is chosen from the group consisting of sugar beet pectin, apple pectin, gum Arabic or nOSA (n-octenyl succinic anhydride) maltodextrin, low molecular weight carboxymethylcellulose (having an intrinsic viscosity < 600 mL/g as measured by capillary flow viscosimetry) and mixtures thereof. Without wishing to be bound by theory, it is believed that the first hydrocolloid acts as a lubricant. The lubricating effect of the first hydrocolloid results in a fluid-like cushion that can sustain pressure created inside the mouth cavity during swallowing. Hence, friction forces between the tongue, the gums teeth and the palate are reduced. Such lubricating effect can be measured for example via the tribology device, which is explained herein below.

The method for improving the mouthfeel of beverages uses one or more first hydrocolloids having an intrinsic viscosity of from 5 to 600 mL/g as measured by capillary flow viscometry, preferably from 5 to 550 mL/g, more preferably from 10 to 500 mL/g, even more preferably from 10 to 450 mL/g, even more preferably from 50 to 450 mL/g, and most preferably from 100 to 450mL/g.

Said first hydrocolloid(s) are included in an amount of from about 10 to about 1500 ppm of the finally obtained beverage. More preferably, the amount of hydrocolloid(s) is from about 20 ppm to about 1300 ppm, more preferably from about 100 ppm to about 1000 ppm, and even more preferably from about 120 ppm to about 800 ppm and most preferably the amount is from 260 ppm to 800 ppm of the final beverage composition.

The method for improving the mouthfeel of beverages also involves other edible substances that enable a positive modification of the body. Such positive modification can be obtained through modifying the viscosity and/or the osmolality of the beverage. The viscosity of the beverage influences the impression of consistency of the beverage, while osmolality affects the richness sensation of the beverage. As such, modifying viscosity and osmolality further contribute to the improved mouthfeel of the beverage. These edible substances are chosen from other hydrocolloids : "second hydrocolloids". Bulking agents and mixtures of said bulking agents and said second hydrocolloids may also be used.

When the body needs to be fine-tuned, the edible substance (second hydrocolloid or bulking agent) is added in a quantity suitable to match the body of the target beverage. Preferably, the body modifying substance is added in order to obtain an increase of viscosity below 0.4 mPa.s (at 20°C), preferably an increase of 0.1 to 0.4 mPa.s (at 20°C). The viscosity can be measured with an Anton Paar MCR300 rheometer (cylinder, CC24 probe) at a constant shear rate of 25 s$^{-1}$ at 20°C.

These second hydrocolloids are guar gum, locust bean gum, cassia gum, pectin from botanical sources (e.g. apple, citrus, soy, potato, ...), high molecular weight carboxymethylcellulose (having an intrinsic viscosity > 600 mL/g, preferably > 700 mL/g as measured by capillary flow viscosimetry), carrageenan, alginate or xanthane and mixtures thereof. The second hydrocolloid is different from the first hydrocolloid (providing the lubricating effect). The second hydrocolloid is included in an amount of from about 10 to about 500 ppm, preferably from about 20 to about 450 ppm, and most preferably from about 30 to about 400 ppm.

Bulking agents may be chosen from the group consisting of isomaltulose, polydextrose, trehalose, erythritol or oligodextrans and mixtures thereof. The bulking agent may be included in an amount of from about 100 to about 12000 ppm, preferably from about 200 to about 11000 ppm, and most preferably from about 300 to about 10000 ppm.

Preferably the ratio of first hydrocolloid(s) to edible substance is from about 150:1 to about 1:1200, preferably from about 75:1 to about 1:600, and more preferably from about 40:1 to about 1:400. If the edible substance only comprises a second hydrocolloid, the ratio of first hydrocolloid to second hydrocolloid is from about 150:1 to about 1:50, preferably from about 75:1 to about 1:45, more preferably from about 40:1 to about 1:20, even more preferably from about 50:1 to about 1:20 and most preferably from about 40:1 to about 1:15. If the other edible substance only comprises bulking agent, the ratio of (lubrifying) hydrocolloid to bulking agent is from about 15:1 to about 1:1200, preferably from about 7:1 to about 1:600, more preferably from about 3:1 to about 1:400.

In a particularly preferred embodiment, the inventive composition for improving the mouthfeel comprises sugar beet pectin alone or in combination with pectin from other sources such as apple pomace or citrus pulp, guar gum or mixtures thereof. The attractiveness of sugar beet pectin is not only based on its favorable price, but also on its ability to add body to the beverage without affecting the flavor or generating an unpleasant organoleptic impression. Thus in a particularly preferred embodiment of the present invention, the hydrocolloids added for improving the mouthfeel is sugar beet pectin.

In another particularly preferred embodiment, the inventive composition for improving the mouthfeel comprises gum Arabic alone or in combination with guar gum, citrus pectin, high molecular weight carboxymethylcellulose or mixtures thereof. Most preferably the composition comprises a mixture of gum Arabic and guar gum.

In yet another particularly preferred embodiment, the inventive composition for improving the mouthfeel comprises apple pectin alone or in combination with citrus pectin, guar gum or mixtures thereof. Most preferably the composition comprises a mixture of apple pectin and citrus pectin.

In yet another particularly preferred embodiment, the inventive composition for improving the mouthfeel comprises nOSA maltodextrin alone or in combination with guar gum.

In yet another particularly preferred embodiment, the inventive composition for improving the mouthfeel comprises low molecular weight carboxymethylcellulose (having an intrinsic viscosity < 600 mUg as measured by capillary flow viscosimetry) alone or in combination with guar gum.

According to one embodiment of the present invention, the method for improving the mouthfeel is used to improve the mouthfeel of a calorie-reduced beverage; the calorie reduction may be from 1 to 100% reduction of the calorific value of the beverage; preferably from 30 to 100%, more preferably from 50 to 100%, most preferably from 80 to 100%. Such a calorie-reduced beverage could be a "light beverage" or "zero calorie beverage", as they are commonly known in the market. In case of such calorie-reduced beverages, the improved mouthfeel can be assessed in comparison to an equivalent full calorie beverage or "regular" equivalent. Ideally, the mouthfeel of the calorie-reduced beverage containing the mouthfeel enhancer resembles the mouthfeel of the corresponding regular equivalent.

In order to improve the mouthfeel of a calorie-reduced beverage, its lubricity is preferably about equal or higher than its equivalent full calorie beverage. Preferably, the viscosity of the calorie-reduced beverage should be about equal to the viscosity of its equivalent full calorie beverage. With the term "equal" it is meant that there is a difference within 5%, preferably within 3%, even more preferably within 1%.

According to one embodiment of the present invention, the method for improving the mouthfeel could also be used to improve the mouthfeel of a carbonated and/or non-carbonated beverage. This beverage could be a full calorie beverage or a calorie-reduced beverage.

According to one embodiment of the present invention, the method for improving the mouthfeel could also be used to improve the mouthfeel of alcoholic beverages. In particular, these alcoholic beverages could be calorie-reduced beverages such as "light beverages". Alternatively, the beverage could also be a non-alcoholic beverage.

In the prior art, the mouthfeel properties of a beverage had to be tested by a taste panel as there were no measuring tools which could reliably examine the mouthfeel behaviour of a low viscosity liquid. The current technology in rheology is not sensitive enough to be used as a tool for screening mouthfeel-enhancing ingredients for low viscosity beverages. In particular, for low viscosity systems such as carbonated soft-drinks, non-carbonated soft drinks, flavored-water, beer, or fruit-juice drinks the mouthfeel is influenced also by other forces than the viscosity, such as the lubrication. Most recently, Cargill Global Food Research has developed a tribometer that can be used as a screening tool and method for beverages and other low viscosity systems, see PCT/EP2008/004443 (published as WO 2008/148536) and PCT/EP2008/004446 (published as WO2008/148538). With this tribological device, it is possible to assess the influence of ingredients on the mouthfeel sensations, which are dependent on the overall texture of the beverage and its physical and chemical interactions in the mouth in combination with a standard rheometer.

In another aspect the present invention is directed to a calorie-reduced beverage composition having a lubricity which is about the same or higher than the lubricity of its equivalent full calorie beverage, said calorie-reduced beverage composition comprising one or more first hydrocolloids having an intrinsic viscosity of about 5 to about 600 mL/g as measured by capillary flow viscosimetry. Preferred ranges for intrinsic viscosity are those defined herein before. The first hydrocolloids are those defined hereinbefore.

The calorie-reduced beverage composition further comprises one or more second hydrocolloids, provided that the second hydrocolloid is different from the first hydrocolloid. Said beverage composition may further comprise other edible substances, e.g. bulking agents, and mixtures of said edible substances and said second hydrocolloids. The second hydrocolloids are those defined hereinbefore. Preferred edible substances and ratio of first hydrocolloids to edible substances are those as defined hereinbefore.

In yet another aspect the present disclosure is directed to a carbonated and/or a non-carbonated-type beverage composition which comprises hydrocolloids having an intrinsic viscosity of 5-600mL/g as measured by capillary flow viscometry. In particular, the hydrocolloid added to the carbonated-type beverage composition can comprise sugar beet pectin, apple pectin, gum Arabic, nOSA maltodextrin, low molecular weight carboxymethylcellulose (having an intrinsic viscosity < 600 mL/g as measured by capillary flow viscosimetry) or mixtures thereof. Preferred edible substances and ratio of first hydrocolloids to edible substances are those as defined hereinbefore.

The sugar beet pectin preferably added to the carbonated-type beverage composition can be added in any amount, depending on the desired alteration of the mouthfeel. Preferably it is included in an amount of up to about 1500 ppm of the finally obtained beverage, more preferably, from about 100 ppm to about 1000 ppm. The mouthfeel improvement according to the present invention may be measured by tribology as being a decrease of the maximum differential friction factor ($\Delta\mu$)max of at least 0.08, preferably 0.10 and more preferably 0.12. For example, good results have been obtained for a carbonated-type beverage composition and a non-carbonated beverage composition wherein the amount of sugarbeet pectin added is 600 ppm of the final beverage composition.

The present invention is further illustrated by the examples provided below. It is understood that there examples are not intended to limit the scope of the present invention in any way.

## EXAMPLES

### Example 1: Oasis® type non-carbonated beverages

1.1 Characterisation of ingredients by Capillary Flow Viscometer

The flow time, dynamic viscosity, relative viscosity, specific viscosity, reduced viscosity and intrinsic viscosity at 25.00°C were measured and calculated in 0.1M NaCl/0.02M acetate (pH 5.5, ionic strength $\mu$=0.111), at eight different concentrations (0.002 to 0.020g/mL) for each ingredient. Samples were allowed to hydrate overnight and were filtered through a Schott glass filter (10...100$\mu$m).

Ubbelohde viscometer (Schott-Geräte) with capillaries 532 10 (constant K = 0,01018mm$^2$/s$^2$) and 532 13 (constant K = 0,02917mm$^2$/s$^2$) were employed. 15mL of solution was filled (after 2 successive rinses) and conditionned at 25.00°C for at least 15 minutes prior flow time measurement (in triplicate) with the ViscoClock (Schott-Geräte). Averaged flow times were then corrected using Hagenbach correction tables provided by the manufacturer.

The density of the filtered solution was measured by pycnometry (10mL capacity pycnometers) at 25.00°C.

Table 1 tabulates the intrinsic viscosity [$\eta$], calculated from the classical 3 extrapolations (Huggins, Kraemer and single point) as follows:

[$\eta$] is the intercept (when concentration c=0) of the equations:

Huggins

$$\eta_{sp}/c = [\eta] + k'[\eta]^2c$$

Kraemer

$$(\ln\eta_{rel})/c = [\eta] + k''[\eta]^2c$$

Single-point

$$[\eta] = \{2(\eta_{sp} - \ln\eta_{rel})\}^{1/2}/c$$

Table 1: Data from capillary flow viscometer

|  | $[\eta]$ (mL/g) |
|---|---|
| gum arabic Ultra VM (from Caldic Belgium N.V., Hemiksem, Belgium) | 19.8 |
| nOSA maltodextrin C*Form 12672 ( from Cargill, Haubourdin, France) | 20.1 |
| sugar beet pectin Stal 1493 (Cargill, Redon, France) | 179 |
| Low molecular weight carboxymethylcellulose Cekol 30 (CP Kelco B.V., Nijmegen, the Netherlands) | 303 |
| Apple pectin (Cargill, Redon, France) | 532 |

1.2 Characterisation of sugar beet pectin by spectrophotometry

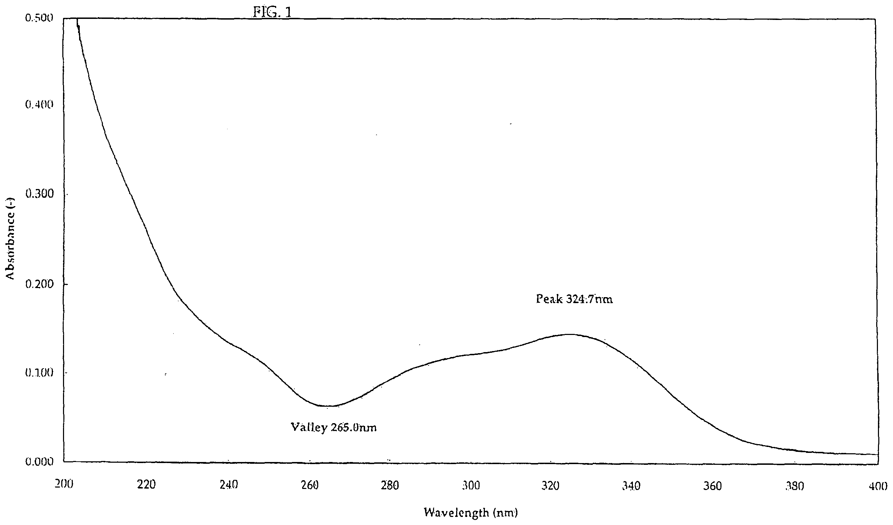

Figure 1 show the UV/visible scan (0.1nm bandwidth) of sugarbeet pectin (174.9 $\mu$g/mL in 0.1M NaCl/0.02M acetate) recorded with a double beam Perkin-Elmer Lambda 650 spectrophotometer using 10,00mm quartz cuvettes (Suprasil®, Hellma 100-QS).

Spectrophotometric accuracy was checked with acidified potassium dichromate. Wavelength and spectral resolution were checked with holmium oxide filter. Stray light was checked with low bromide KCl solution.

1.3 Composition of Oasis®type non-carbonated beverages

The Oasis® type non-carbonated beverages have the following composition:

Regular beverage: water, juices from concentrate 15% (orange, apple), sugar, acidity regulator E330 (citric acid), aromas, preserver E211 (sodium benzoate), stabiliser E412 (guar gum), antioxidant E300 (ascorbic acid). **9 % sugar added**

Light beverage: water, juices from concentrate 15% (orange, apple), acidity regulator E330 (citric acid), tested ingredient, high intensity sweeteners (acesulfame K, Aspartame), aromas, preserver E211 (sodiumbenzoate), **0 % sugar added**

1.4 Friction profile **of** Oasis®type non-carbonated beverages by tribology

All tribology measurements were carried out on a MCR-301 rheometer (Anton Paar, Stuttgart, Germany) using a tribology device with a measuring system of the ball-on-three-plates geometry, which was temperature controlled by a Peltier and hood temperature control system. This tribology device employs stainless steel ball which is rotated over a contact area comprising 3 grooves, where 3 interchangeable strips of substrates are placed. The substrates are made of a thermoplastic elastomer (HTF 8654-94, available from KRAIBURG TPE GmbH, Waldkraiburg, Austria).

The test temperature was set at 20°C with an initial non-recording pre-shear of 0.4 mm/s for 10 minutes followed by recording the friction coefficient as a function of sliding speed (0.4 to 250 mm/s) at constant load of 3 N. The friction force $F_R$ is measured as a function of sliding speed. The friction factor or coefficient $\mu$ was calculated as the ratio of friction force to normal force $F_R/F_N$.

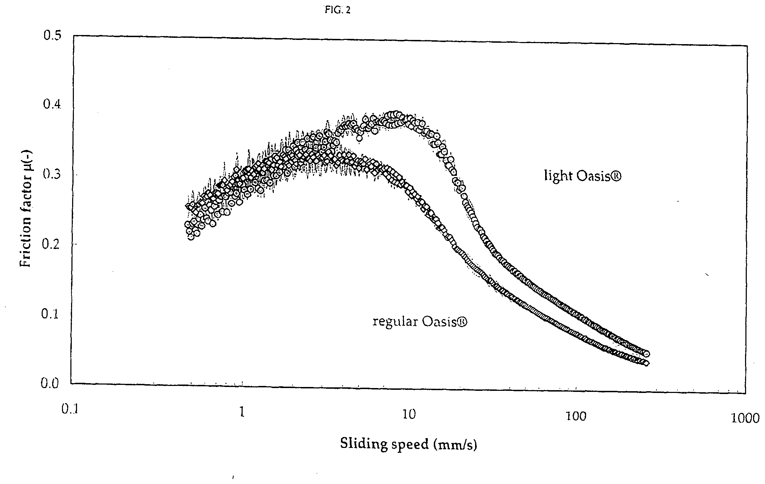

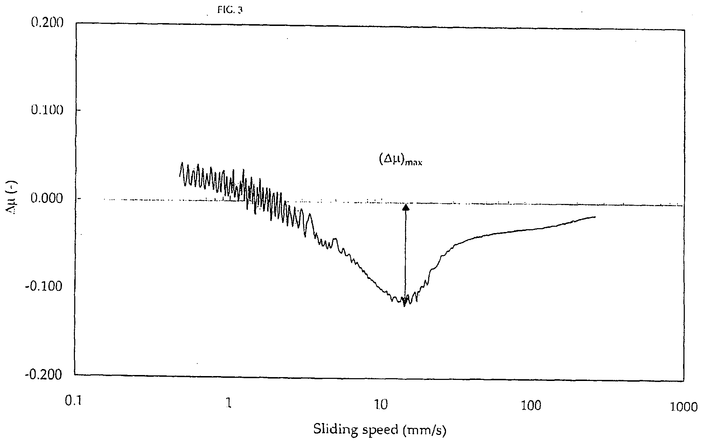

Figure 2 show the friction profile (Stribeck curve) of a light and a regular Oasis® type beverage. Figure 3 show the differential friction profile of a light and a regular Oasis-type beverage and the calculation of the maximum differential friction factor $(\Delta\mu)_{max}$.

1.5 Sensory analysis (mouthfeel), rheology & tribology of Oasis-type non-carbonated beverages

Oasis® type non-carbonated beverages were prepared with hydrocolloids levels of 100, 600 and 1,000ppm. Ranking test by trained panelists (n=3) focusing on mouthfeel perception were performed using regular Oasis as reference. Table 2 tabulates sensory scores of the beverages ranking the hydrocolloids by potency for mouthfeel perception.

Table 2: Sensory analysis mouthfeel data

| Hydrocolloids potency | Sensory Score (ranking) |
|---|---|
| 1. Sugarbeet Pectin | 100ppm < 600ppm ~ regular < 1,000ppm |
| 2. Gum Arabic | 100ppm < 600ppm < regular < 1,000ppm |

(continued)

| Hydrocolloids potency | Sensory Score (ranking) |
|---|---|
| 3. nOSA maltodextrin | 100ppm << 600ppm < 1,000ppm < regular |
| 4. carboxymethyl cellulose | 100ppm < 600ppm < 1,000ppm << regular |

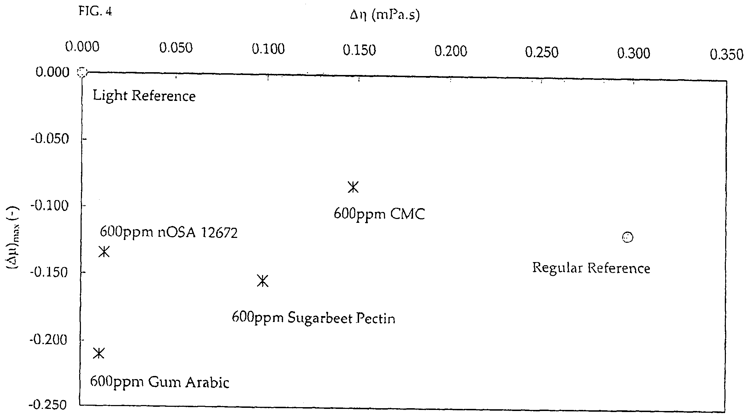

Figure 4 show the effect of 600ppm hydrocolloid addition on viscosity and friction *versus* light reference. The potency of sugar beet pectin for mouthfeel perception is due to a combination of predominantly its lubrication properties and to a lower extent, its viscosity properties.

Although 600ppm sugarbeet pectin can provide a mouthfeel perception equivalent to the regular beverage, Figure 4 show that there is still a gap in viscosity compared to the regular beverage. It is therefore recommended to fill the gap with a hydrocolloid or a bulking agent having a low impact on lubrication, filling this gap is improving the body of the beverage.

## Example 2: Fanta® type carbonated beverages

### 2.1 Composition of Fanta® type carbonated beverages

The Fanta® type carbonated beverages have the following composition:

Regular beverage: carbonated water, sugar, orange juice from concentrate, acidity regulator E330 (citric acid), aromas, preserver E211 (sodiumbenzoate), stabilizer E412 (guar gum), antioxidant E300 (ascorbic acid).

**9 % sugar added**

Light beverage: carbonated water, orange juice from concentrate, acidity regulator E330 (citric acid), Tested ingredient, high intensity sweeteners (acesulfame K, Aspartame),aromas, preserver E211 (sodiumbenzoate),

**0% sugar added**

2.2 Sensory analysis (mouthfeel), rheology & tribology of Fanta® type carbonated beverages Similar to example 1 part 1.5, Fanta® type carbonated beverages were prepared with hydrocolloids levels of 100, 600 and 1,000ppm.

Table 3 tabulates sensory scores of the beverages ranking the hydrocolloids by potency for mouthfeel perception.

Table 3: Sensory analysis mouthfeel data

| Hydrocolloids potency | Sensory Score (ranking) |
|---|---|
| 1. Sugarbeet Pectin | 100ppm < 600ppm ~ regular < 1,000ppm |
| 2. Gum Arabic | 100ppm << 600ppm < regular < 1,000ppm |
| 3. nOSA maltodextrin | 100ppm < 600ppm < 1,000ppm < regular |
| 4. carboxymethylcellulose | 100ppm < 600ppm < 1,000ppm << regular |

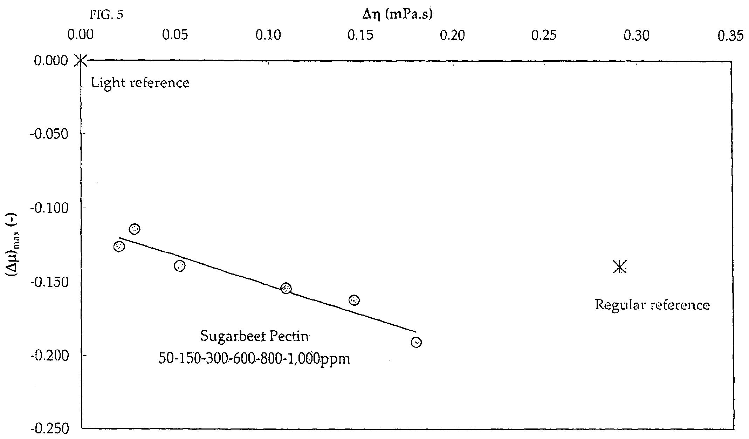

Figure 5 show the effect of 50 to 1,000ppm sugarbeet pectin addition on viscosity and friction *versus* light reference. It is confirmed that the potency of sugarbeet pectin for mouthfeel perception is due to predominantly its lubrication properties and to a lower extent, its viscosity properties.

## Example 3: Influence of sugar beet pectin on the triboloctical properties of light soft drinks

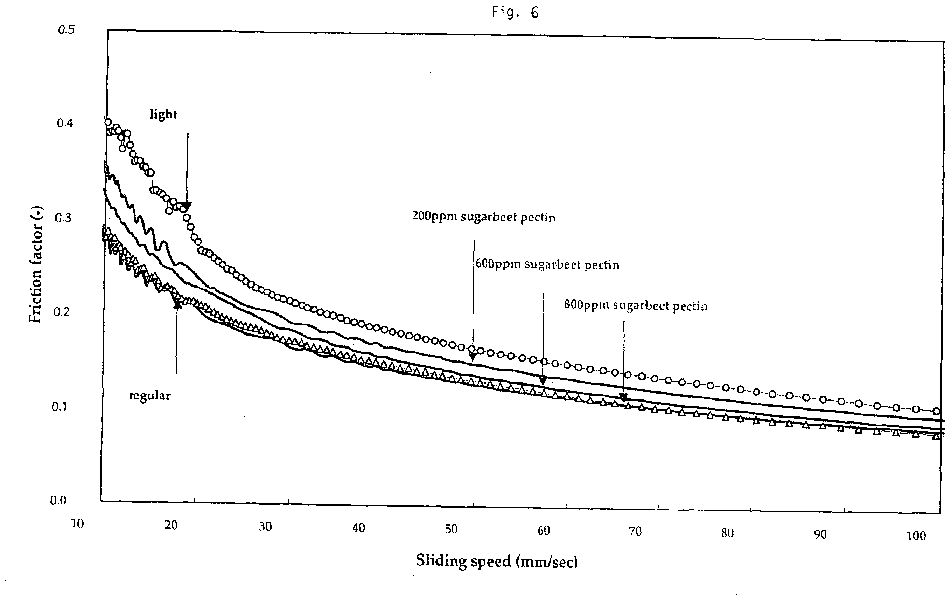

Degassed mixtures of Fanta® Fanta Light® and Fanta Light with increasing concentrations of sugar beet pectin were examined by rheological measurements, tribological measurements and a test panel assessing the sensory mouthfeel of these compositions. The results are summarized in Table 4 below. The tribological data are also depicted in Figure 6.

Table 4

| Sample name | Sugar beet pectin concentration (ppm, as is) | Capillary viscosity at 20°C | Friction factor µ 10-100 mm/sec at 20°C | Sensory mouthfeel at 20°C |
|---|---|---|---|---|
| Light | 0 | 1.122 | 0.231 | Empty |
| 200 ppm sugar beet pectin | 200 | 1.150 | 0.201 | Improved |
| 600 ppm sugar beet pectin | 600 | 1.210 | 0.187 | High |
| 800 ppm sugar beet pectin | 800 | 1.244 | 0.169 | Highest |
| Regular | 0 | 1.391 | 0.174 | high |

## Example 4: Flavoured water

4.1 Preparation of iso-viscous flavoured water

Ingredients of flavoured water (Vitalinea® Fraise-Framboise, Danone®): spring water (99.7%), acidifiers (citric acid, malic acid), magnesium sulphate, calcium lactate, calcium chloride, aroma, E212 (potassium benzoate), E242 (dimethyl dicarbonate), high intensity sweeteners (acesulfame K, sucralose).

A light and a regular reference were prepared with 3 and 12g/100mL sucrose addition. Light flavoured water spiked with hydrocolloids were prepared to achieve the same viscosity as the regular reference (see table 4). The hydrocolloids were allowed to hydrate 1 hour at room temperature under gentle magnetic stirring. The beverages were then stored overnight at 4°C prior sensory analysis.

4.2 Sensory analysis mouthfeel), rheology & tribology of Fanta®-type carbonated beverages

Conditions:

Temperature: 4°C (after overnight fridge refrigeration)
viscosity (20°C) = 1.009mPa.s (capillary flow)
pH (20°C) = 5.7
conductivity (20°C) = 1,490mS

Sensorial descriptor is mouthfeel sensation. The poor mouthfeel reference is the light beverage (3g sucrose *per* 100ml), the good mouthfeel reference is the regular beverage (12g sucrose per 100ml). As shown in the table below, the highest mouthfeel perception was obtained for the flavoured water spiked with sugar beet pectin.

Table 5: Sensory Analysis (mouthfeel)

| Beverage | sucrose (g/100ml) | hydrocolloid (g/100ml, as is) | $\eta_{rel}$ (calculated) | Sensory score mouthfeel sensation |
|---|---|---|---|---|
| Light | 3 | - | 1.077 | 1 (low) |
| nOSA maltodextrin C*Form 12672 (Cargill) | 3 | 1.29 | 1.393 | 2 |
| gum arabic Ultra VM (Caldic Belgium N.V.) | 3 | 1.45 | | 3 |
| Regular | 12 | - | | |
| sugar beet pectin Stal 1493 (Cargill) | 3 | 0.22 | | 4 (high) |

**Claims**

1. A method for improving the mouthfeel of beverages comprising the step of adding from 10 to 1500 ppm of one or more first hydrocolloids and from 10 to 500 ppm of second hydrocolloids to said beverage, **characterized in that** the first hydrocolloids have an intrinsic viscosity of 5-600 mL/g as measured by capillary flow viscosimetry and are selected from the group consisting of sugar beet pectin, apple pectin, gum arabic, nOSA (n-octenyl succinic anhydride) maltodextrin, low molecular weight carboxymethylcellulose and mixtures thereof, and **in that** the second hydrocolloids are selected from the group consisting of guargum, locust bean gum, cassia gum, pectin from botanical sources, high molecular weight carboxymethylcellulose, carrageenan, alginate, xanthane and mixtures thereof, and **in that** said second hydrocolloids are different from the one or more first hydrocolloids.

2. A method according to claim 1, wherein said intrinsic viscosity is from about 10 to about 450 mL/g.

3. The method according to claims 1-2, wherein the ratio of first hydrocolloid to second hydrocolloid is from 150:1 to 1:50 with the proviso that no bulking agents were used.

4. The method according to any of the preceding claims, **characterized in that** the addition of first hydrocolloids level to a calorie-reduced beverage, decreases the maximum differential friction factor $(\Delta\mu)max$ by at least 0.08 as measured by tribology.

5. The method to any of the preceding claims, **characterized in that** the first hydrocolloids are added in an amount of from 100 ppm to 1000 ppm.

6. The method according to any of the preceding claims, **characterized in that** the beverage is a calorie-reduced beverage having a lubricity which is about equal or higher than the lubricity of its equivalent full calorie beverage.

7. A calorie-reduced beverage composition having a lubricity and a viscosity which is about the same or higher than the lubricity and the viscosity of its equivalent full calorie beverage, said calorie-reduced beverage composition comprising from 10 to 1500 ppm of one or more first hydrocolloids and from 10 to 500 ppm of second hydrocolloids, **characterized in that** the first hydrocolloids have an intrinsic viscosity of 5-600 mL/g as measured by capillary flow viscosimetry and are selected from the group consisting of sugar beet pectin, apple pectin, gum arabic, nOSA (n-octenyl succinic anhydride) maltodextrin, low molecular weight carboxymethylcellulose and mixtures thereof, and **in that** the second hydrocolloids are selected from the group consisting of guar gum, locust bean gum, cassia gum, pectin from botanical sources, high molecular weight carboxymethylcellulose, carrageenan, alginate, xanthane and mixtures thereof, and **in that** said second hydrocolloids are different from the one or more first hydrocolloids.

8. A calorie-reduced beverage composition according to claim 7, wherein said intrinsic viscosity is from about 10 to about 450 mL/g.

9. A calorie-reduced beverage composition according to claims 7-8, wherein the ratio of first hydrocolloid to second hydrocolloid is from 150:1 to 1:50 and wherein no bulking agents were used in said beverage composition.

**Patentansprüche**

1. Verfahren zur Verbesserung des Mundgefühls von Getränken, welches den Schritt umfasst des Hinzufügens von 10 bis 1500 ppm eines oder mehrerer erster Hydrokolloide und von 10 bis 500 ppm zweiter Hydrokolloide zu besagtem Getränk, **dadurch gekennzeichnet, dass** die ersten Hydrokolloide eine intrinsische Viskosität besitzen von 5-600 mL/g, wie mittels Kapillarviskosimetrie gemessen, und ausgewählt sind aus der Gruppe bestehend aus Zuckerrübenpektin, Apfelpektin, Gummi arabicum, nOSA - (n-Octenylbernsteinsäureanhydrid) Maltodextrin, niedermolekularer Carboxymethylcellulose und Mischungen daraus, und dadurch, dass die zweiten Hydrokolloide ausgewählt sind aus der Gruppe bestehend aus Guargummi, Johannisbrotkernmehl, Cassia-Gum, Pektin aus pflanzlichen Quellen, hochmolekularer Carboxymethylcellulose, Carrageen, Alginat, Xanthan und Mischungen daraus, und dadurch, dass besagte zweite Hydrokolloide sich von dem einen oder mehreren ersten Hydrokolloiden unterscheiden.

2. Verfahren nach Anspruch 1, wobei besagte intrinsische Viskosität von etwa 10 bis etwa 450 mL/g beträgt.

3. Verfahren nach Ansprüche 1-2, wobei das Verhältnis von erstem Hydrokolloid zu zweitem Hydrokolloid von 150:1 bis 1:50 beträgt mit der Maßgabe, dass keine Füllstoffe eingesetzt wurden.

4. Verfahren nach einem der vorstehenden Ansprüche, **dadurch gekennzeichnet, dass** das Hinzufügen des Gehalts an ersten Hydrokolloiden zu einem kalorienreduzierten Getränk den maximalen differentiellen Reibungsfaktor (Δμ)max um mindestens 0,08 reduziert, wie mittels Tribologie gemessen.

5. Verfahren nach einem der vorstehenden Ansprüche, **dadurch gekennzeichnet, dass** die ersten Hydrokolloide in einer Menge von 100 ppm bis 1000 ppm hinzugefügt werden.

6. Verfahren nach einem der vorstehenden Ansprüche, **dadurch gekennzeichnet, dass** das Getränk ein kalorienreduziertes Getränk ist, welches eine Lubrizität besitzt, die etwa gleich oder größer ist als die Lubrizität des ihm äquivalenten Getränks mit vollem Kaloriengehalt.

7. Kalorienreduzierte Getränkezusammensetzung, welche eine Lubrizität und eine Viskosität besitzt, die etwa gleich oder größer ist als die Lubrizität und die Viskosität des ihm äquivalenten Getränks mit vollem Kaloriengehalt, wobei besagte kalorienreduzierte Getränkezusammensetzung von 10 bis 1500 ppm eines oder mehrerer erster Hydrokolloide und von 10 bis 500 ppm zweiter Hydrokolloide umfasst, **dadurch gekennzeichnet, dass** die ersten Hydrokolloide eine intrinsische Viskosität besitzen von 5-600 mL/g, wie mittels Kapillarviskosimetrie gemessen, und ausgewählt sind aus der Gruppe bestehend aus Zuckerrübenpektin, Apfelpektin, Gummi arabicum, nOSA- (n-Octenylbernsteinsäureanhydrid) Maltodextrin, niedermolekularer Carboxymethylcellulose und Mischungen daraus, und dadurch, dass die zweiten Hydrokolloide ausgewählt sind aus der Gruppe bestehend aus Guargummi, Johannisbrotkernmehl, Cassia-Gum, Pektin aus pflanzlichen Quellen, hochmolekularer Carboxymethylcellulose, Carrageen, Alginat, Xanthan und Mischungen daraus, und dadurch, dass besagte zweite Hydrokolloide sich von dem einen oder mehreren ersten Hydrokolloiden unterscheiden.

8. Kalorienreduzierte Getränkezusammensetzung nach Anspruch 7, wobei besagte intrinsische Viskosität von etwa 10 bis etwa 450 mL/g beträgt.

9. Kalorienreduzierte Getränkezusammensetzung nach Anspruch 7-8, wobei das Verhältnis von erstem Hydrokolloid zu zweitem Hydrokolloid von 150:1 bis 1:50 beträgt und wobei in der Getränkezusammensetzung keine Füllstoffe verwendet wurden.

## Revendications

1. Procédé d'amélioration de la sensation en bouche de boissons comprenant l'étape qui consiste à ajouter de 10 à 1 500 ppm d'un ou plusieurs premiers hydrocolloïdes et de 10 à 500 ppm de seconds hydrocolloïdes auxdites boissons, **caractérisé en ce que** les premiers hydrocolloïdes présentent une viscosité intrinsèque de 5-600 mL/g telle que mesurée par viscosimètrie à écoulement capillaire et sont sélectionnés à partir du groupe constitué par de la pectine de betterave sucrière, de la pectine de pomme, de la gomme arabique, de la nOSA (anhydride n-octényl-succinique) maltodextrine, de la carboxyméthylcellulose à faible poids moléculaire et d'un mélange de celles-ci, et que les seconds hydrocolloïdes sont sélectionnés à partir du groupe constitué par de la gomme guar, de la gomme de graines de caroube, de la gomme cassia, de la pectine d'origine botanique, de la carboxyméthylcellulose à poids moléculaire élevé, de la carraghénine, de l'alginate, de la xanthane et des mélanges de ceux-ci, et **en ce que** lesdits seconds hydrocolloïdes sont différents du ou des plusieurs premiers hydrocolloïdes.

2. Procédé selon la revendication 1, dans lequel ladite viscosité intrinsèque se situe entre environ 10 et environ 450 mL/g.

3. Procédé selon les revendications 1 et 2, dans lequel le rapport du premier hydrocolloïde au second hydrocolloïde est de 150:1 à 1:50 à condition qu'aucun agent de charge n'ait été utilisé.

4. Procédé selon l'une quelconque des revendications précédentes, **caractérisé en ce que** l'ajout d'un niveau de premiers hydrocolloïdes à une boisson à teneur réduite en calories diminue le coefficient de friction différentiel maximal (Δμ)max d'au moins 0,08 tel que mesuré par tribologie.

5. Procédé selon l'une quelconque des revendications précédentes, **caractérisé en ce que** les premiers hydrocolloïdes sont ajoutés en une quantité allant de 100 ppm à 1 000 ppm.

6. Procédé selon l'une quelconque des revendications précédentes, **caractérisé en ce que** la boisson est une boisson à teneur réduite en calories ayant une onctuosité qui est à peu près identique ou supérieure à l'onctuosité d'une boisson équivalente à teneur calorique élevée.

7. Composition de boisson à teneur réduite en calories ayant une onctuosité et une viscosité qui sont à peu près identiques ou supérieures à l'onctuosité et à la viscosité d'une boisson équivalente à teneur calorique élevée, ladite composition de boisson à teneur réduite en calories comprenant de 10 à 1 500 ppm d'un ou plusieurs premiers hydrocolloïdes et de 10 à 500 ppm de seconds hydrocolloïdes, **caractérisé en ce que** les premiers hydrocolloïdes présentent une viscosité intrinsèque de 5-600 mL/g telle que mesurée par viscosimètrie à écoulement capillaire et sont sélectionnés à partir du groupe constitué par de la pectine de betterave sucrière, de la pectine de pomme, de la gomme arabique, de la nOSA (anhydride n-octényl-succinique) maltodextrine, de la carboxyméthylcellulose à faible poids moléculaire et d'un mélange de celles-ci, et **en ce que** les seconds hydrocolloïdes sont sélectionnés à partir du groupe constitué par de la gomme guar, de la gomme de graines de caroube, de la gomme cassia, de la pectine d'origine botanique, de la carboxyméthylcellulose à poids moléculaire élevé, de la carraghénine, de l'alginate, de la xanthane et des mélanges de ceux-ci, et **en ce que** les dits seconds hydrocolloïdes sont différents du ou des plusieurs premiers hydrocolloïdes.

8. Composition de boisson à teneur réduite en calories selon la revendication 7, dans laquelle ladite viscosité intrinsèque se situe entre environ 10 et environ 450 mL/g.

9. Composition de boisson à teneur réduite en calories selon les revendications 7 et 8, dans laquelle le rapport du premier hydrocolloïde au second hydrocolloïde est de 150:1 à 1:50 et dans laquelle aucun agent de charge n'a été utilisé dans ladite composition de boisson.

FIG. 1

FIG. 2

FIG. 3

FIG. 4

Δη (mPa.s)

Light Reference

600ppm CMC

600ppm nOSA 12672

Regular Reference

600ppm Sugarbeet Pectin

600ppm Gum Arabic

$(\Delta\mu)_{max}$ (-)

FIG. 5

**REFERENCES CITED IN THE DESCRIPTION**

**Patent documents cited in the description**

- WO 2007066233 A
- EP 0426434 A1
- EP 2008004443 W
- WO 2008148536 A
- EP 2008004446 W
- WO 2008148538 A